(19) **Europäisches Patentamt / European Patent Office / Office européen des brevets**

(11) **EP 4 643 989 A1**

(12) # EUROPEAN PATENT APPLICATION

(43) Date of publication:
05.11.2025 Bulletin 2025/45

(21) Application number: 24173237.9

(22) Date of filing: 30.04.2024

(51) International Patent Classification (IPC):
$B01J\ 20/04^{(2006.01)}$    $B01J\ 20/08^{(2006.01)}$
$B01J\ 20/28^{(2006.01)}$    $B01J\ 20/30^{(2006.01)}$
$C01F\ 7/784^{(2022.01)}$    $C02F\ 1/28^{(2023.01)}$

(52) Cooperative Patent Classification (CPC):
B01J 20/3007; B01J 20/041; B01J 20/08;
B01J 20/2803; B01J 20/28042; B01J 20/28057;
B01J 20/28069; B01J 20/28078; B01J 20/3042;
B01J 20/3071; C01F 7/784; C02F 1/28; C02F 1/281

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SCG Chemicals Public Company Limited**
**10800 Bangkok (TH)**

(72) Inventors:
- **Hong, Jindui**
  **Bangkok (TH)**
- **Elliott, Clement**
  **Bangkok (TH)**
- **Schimmoeller, Bjoern**
  **Bangkok (TH)**
- **O'Hare, Dermot**
  **Bangkok (TH)**

(74) Representative: **Erbacher, Martin**
**Boehmert & Boehmert**
**Anwaltspartnerschaft mbB**
**Pettenkoferstrasse 22**
**80336 München (DE)**

(54) **SHAPED MATERIAL FOR EXTRACTING LITHIUM FROM A LITHIUM-CONTAINING AQUEOUS SOLUTION, METHOD FOR PREPARING THE SAME, AND METHOD FOR EXTRACTING LITHIUM FROM A LITHIUM-CONTAINING AQUEOUS SOLUTION**

(57) The present invention relates to a shaped material for extracting lithium from a lithium-containing aqueous solution. The invention relates further to a method for preparing said shaped material. The invention relates further to a method for extracting lithium from a lithium-containing aqueous solution using said shaped material. The invention relates further to the use of said shaped material for extracting lithium from a lithium-containing aqueous solution.

Mix of LiOH·H$_2$O and NaOH
↓
Add MgCl$_2$·6H$_2$O
↓
Add AlCl$_3$·6H$_2$O
↓
Aging
↓
Adsorbent Precursor
↓
Wash
↓
Purified Adsorbent Precursor
↓
Extrusion
↓
Shaped Adsorbent Pellet

Fig. 1

**EP 4 643 989 A1**

**Description**

FIELD OF THE INVENTION

The present invention relates to a shaped material for extracting lithium from a lithium-containing aqueous solution. The invention relates further to a method for preparing said shaped material. The invention relates further to a method for extracting lithium from a lithium-containing aqueous solution using said shaped material. The invention relates further to the use of said shaped material for extracting lithium from a lithium-containing aqueous solution.

BACKGROUND OF THE INVENTION

Lithium is a critical mineral in the energy transition. Currently, the majority of global lithium is produced from hard rock lithium mining and pond solar evaporation of continental lithium containing brine waters. Both approaches are environmentally non-sustainable due to their significant footprint in land, water, and carbon.

In comparison, direct lithium extraction (DLE), especially adsorbent based DLE, is an emerging technology that has potential to enable the supply of sustainable lithium with low environmental footprint. Conventional lithium adsorbents have been developed by incorporation of lithium salts into the template of aluminium hydroxide (Gibbsite, Bayerite and other forms). With constraints of the aluminium hydroxide template, the tunability of lithium adsorbent is limited.

Saleh Al-dhawi et al. Case Studies in Chemical and Environmental Engineering, 2023, 7, 100350 discloses lithium adsorption from aqueous solution using aluminum hydroxide: Characterization, optimization by response surface methodology, kinetic modelling, and isotherm studies.

US 6,280,693 B1 discloses a composition comprising pellets consisting essentially of an integral mass of polycrystalline material of randomly disposed crystals of hydrated alumina infused with an amount of LiX to produce $LiX/Al(OH)_3$ having up to a mol fraction of 0.33 of LiX in the so-produced $LiX/Al(OH)_3$, wherein LiX is at least one compound selected from the group consisting of Li hydroxide, Li halide, Li nitrate, Li sulfate, and Li bicarbonate.

US 11,666,885 B2 discloses a batch of shaped adsorbent particles comprising an average particle diameter of not greater than about 5.0 mm and a particle aspect ratio (L/D) distribution span PARDS of not greater than about 50%, where PARDS is equal to $(AR_{90}-AR_{10})/AR_{50}$, where $AR_{90}$ is equal to the diameter at which 90% of said particles in said hatch of particles comprise a diameter less than said $AR_{90}$ diameter, $AR_{10}$ is equal to the diameter at which 10% of said particles in said batch of particles comprise a diameter less than said AR10 diameter, and $AR_{50}$ is equal to the diameter at which 50% of said particles in said batch of particles comprise a diameter less than said $AR_{50}$ diameter.

There is a particular need for new types of adsorbent overcoming drawbacks of the prior art, especially with improved properties of porosity and median pore diameter to enhance the performance including lithium capacity. Furthermore, there is the need to provide Li-adsorbent materials with improved structural stability. In addition, lithium excess is generally required to ensure sufficient lithium intercalation into the structure of aluminium hydroxide, which leads to high raw materials cost. It is critical to have low or zero lithium excess in the preparation of lithium adsorbent to enable low-cost production.

DISCLOSURE

The object is achieved by a shaped material for extracting lithium from a lithium-containing aqueous solution, wherein the shaped material fulfills the following Formula 1

$$\text{Formula 1:}$$

$$porosity * median\ pore\ diameter > 0.36\ nm$$

wherein

the porosity is the ratio of the pore volume of the shaped material and the total volume of the shaped material measured by mercury porosimetry; and

the median pore diameter is the pore diameter where 50% of the total pore volume has been added in the cumulative pore volume. The cumulative pore volume versus the pressure can be measured by mercury porosimetry. The object is further achieved by a method for preparing the shaped material according to the present invention, the method comprising the steps:

- preparing an adsorbent precursor from a mixture comprising a lithium precursor, and an aluminum precursor, and optionally a magnesium precursor;

- purifying the adsorbent precursor to obtain a purified adsorbent precursor;

- mixing the purified adsorbent precursor with a binder to obtain a shapable composition; and

- shaping the shapable composition to obtain the shaped material.

The object is further achieved by a method for extracting lithium from a lithium-containing aqueous solution comprising contacting a shaped material according to the present invention with the lithium-containing aqueous solution.

Finally, the object is achieved by the use of a shaped material according to the present invention for extracting lithium from a lithium-containing aqueous solution.

Advantageous effects

Surprisingly, it was found that shaped materials according to the present invention are highly efficient in the adsorption and desorption of lithium and feature good structural stability. Especially, in certain embodiments, the present invention provides a type of shaped adsorbent, such as an adsorbent in the form of pellets, that can be used for lithium extraction from lithium containing water. The type of shaped adsorbent has porous structure and high permeability for the efficient adsorption and desorption of lithium, optionally with additional elemental doping to maintain good structure stability.

Another advantage of the preparation method according to the invention is that there is no lithium excess in the procedures by using low-cost sodium hydroxide to replace more costly lithium hydroxide to enable low-cost production of adsorbent precursors.

Another advantage of the preparation method according to the invention is the possibility of the incorporation of foreign element like magnesium in the crystal structure, which improves the stability of adsorbent pellets.

Another advantage of the preparation method according to the invention is that residue sodium chloride in the adsorbent precursors can be reduced efficiently, whereby porosity and permeability of the adsorbent and the efficient adsorption and desorption of lithium can be increased.

DESCRIPTION OF THE FIGURES

FIG. 1 is an illustration of a flowchart of a method of making a type of adsorbent pellet of one embodiment of the present invention.

FIG. 2 is X-ray powder diffraction pattern of adsorbent precursor in Example 1 (S1) according to the invention.

FIG. 3 is X-ray powder diffraction pattern of adsorbent precursor in Example 2 (S2) according to the invention.

FIG. 4 is X-ray powder diffraction pattern of adsorbent precursor in Comparative Example 1 Example (CS1) according to the invention.

DETAILED DESCRIPTION OF THE INVENTION

Hereinafter, various embodiments of the present disclosure will be described in detail so that those ordinarily skilled in the art to which the present disclosure pertains can easily carry out the present disclosure. However, these are only examples given for illustrative purposes, and the scope of the present disclosure is not intended to be limited to the following contents.

Unless otherwise restricted, a detailed description defining or specifying the elements may be applied to all inventions, and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

The term "comprise" or "include" when used in this specification, specifies the presence of stated elements, but does not preclude the presence or addition of one or more other elements, unless the context clearly indicates otherwise.

However, unless explicitly stated otherwise, "comprising" or "including" or the like includes "essentially comprising" and "consisting of".

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a shaped material essentially comprising a layered double hydroxide, water and a binder may comprise the layered double hydroxide, the water and the binder in a total amount of at least 70 wt% with respect to the total weight of the shaped material.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

Shaped material

According to a first aspect, the present invention relates to a shaped material for extracting lithium from a lithium-containing aqueous solution.

The shaped material fulfills the conditions of the following Formula 1

$$\text{Formula 1:}$$

$$porosity * median\ pore\ diameter > 0.36\ nm.$$

In Formula 1, the porosity refers to the ratio, especially the percentage of the pore volume of the shaped material and the total volume of the shaped material measured by mercury porosimetry. The porosity as referred to herein is a dimensionless measure of the void (i.e. "empty") spaces in a material, and is a fraction of the volume of voids over the total volume, between 0 and 1, corresponding to a percentage between 0% and 100%. For example, the porosity = 43% could be converted to the porosity = 0.43. Especially, the porosity may be measured by a mercury porosimeter (Micromeritics, MicroActive AutoPore V9600). the porosity may be measured according to ASTM UOP578-11 in the version at the priority date of the present application.

In Formula 1, the median pore diameter is the pore diameter where 50% of the total pore volume has been added in the cumulative pore volume. The cumulative pore volume versus the pressure can be measured by mercury porosimetry according to ASTM UOP578-11 in the version at the priority date of the present application.

The median pore diameter (or radius) is an indicator for the permeability [J. Geophys. Eng. 10 (2013) 025014 (7pp)], which is the ability of adsorbent to allow a liquid, especially water, to pass the pores.

For the mercury porosimetry measurement, each sample was oven-dried under vacuum at 60 °C for at least 24 h to remove moisture in pore spaces and then cooled to room temperature (~23 °C) under vacuum before the mercury porosimetry measurement. During a measurement, each sample underwent two analyses: low-pressure and high-pressure analyses. The highest pressure produced by Micromeritics AutoPore IV 9600 is 60 000 psia (413 MPa), and the pore-throat diameter corresponding to this pressure is about 3 nm. The largest pore-throat diameter recorded is about 600 $\mu$m under low-pressure analysis. The samples were evacuated to 50 $\mu$mHg. Equilibration time was chosen to be 10 s. Both values of porosity and median pore diameter can be readily given by the Micromeritics software.

The product of porosity and median pore diameter (porosity * median pore diameter) may also be referred to as "cross feature". The cross-feature may be from larger than 0.36 nm (such as 0.361 nm) to 260 nm (0.36 < porosity * median pore diameter < 260), preferably from 0.4 nm to 260 nm, more preferably from 5 nm to 260 nm, most preferably from 6 nm to 260 nm. The cross-feature is larger than 0.36 nm, preferably may be at least 0.4 nm, at least 1 nm, at least 2 nm, at least 3 nm, at least 4 nm, at least 5 nm, at least 5.3 nm, at least 5.33 nm, at least 6 nm, at least 6.7 nm, or at least 6.79 nm. The cross-feature may be 260 nm or less, 240 nm or less, 200 nm or less, 180 nm or less, 160 nm or less, 140 nm or less, 120 nm or less, 100 nm or less, 80 nm or less, 60 nm or less, 40 nm or less, 20 nm or less, 10 nm or less, 8 nm or less, or 7 nm or less. Choosing the cross feature accordingly is advantageous in view of adsorption and/or desorption efficiency.

The shaped material may be in a form selected from the group consisting of pellets, particles, granules, spheres, extrudates or mixtures thereof. That is, the shaped material consists of shaped pieces, wherein each of the shaped pieces may have the form of a pellet, a particle, a granule, a sphere or an extrudate. It is preferred that the shaped material is in the form of pellets, more preferably cylindrical pellets. Such forms are preferred in view of usability of the shaped material for lithium extraction. The respective pellets may have a diameter of 0.8 mm to 1.6 mm and length of 1.5 mm to 12 mm. The respective particles, granules, sphere, and/or extrudates. may have a diameter of 0.8 mm to 1.6 mm.

The shaped material may comprise an adsorbent precursor and/or a purified adsorbent precursor, preferably comprises, essentially comprises or consists of the purified adsorbent precursor. The purified adsorbent precursor is obtained by purifying the adsorbent precursor (for example, removing contaminant and/or by-product generated in the preparation process of the adsorbent precursor). The adsorbent precursor and/or the purified adsorbent precursor may comprise a layered double hydroxide. Layered double hydroxides (LDH) are a class of ionic solids characterized by a layered structure. The layered double hydroxide may be a LiAl-layered double hydroxide, a metal doped LiAl-layered double hydroxide doped or a mixture thereof. The metal dopant in the metal doped LiAl-layered double hydroxide may be Mg, Fe, Mn, Co, Ni, Cu, Zn, Cr, V or a mixture of two or more thereof, preferably Mg. Preferably, the layered double hydroxide is a LiMgAl-layered double hydroxide. The presence of Mg in the LDH may improve the structure stability of the LDH, especially in comparison with other metals, such as Mn or Fe.

The LiAl-layered double hydroxide may comprise

- Li in an amount of 1.0 to 2.5 wt.-%;

- Al in an amount of 10 to 26 wt.-%; based on the total weight of the shaped material, respectively.

The LiMgAl-layered double hydroxide may comprise

- Li in an amount of 1.0 to 2.5 wt.-%;

- Al in an amount of 10 to 26 wt.-%;

- Mg in an amount of 0.01 to 0.4 wt.-%;

based on the total weight of the shaped material, respectively.

The LiMgAl-layered double hydroxide may comprise

- Li in an amount of 1.4 to 1.7 wt.-%;

- Al in an amount of 15 to 17 wt.-%, preferably 15 to less than 17 wt.-%;

- Mg in an amount of 0.03 to 0.05 wt.-%;

based on the total weight of the shaped material, respectively.
The LiMgAl-layered double hydroxide may comprise

- Li in an amount of 1.4 to 1.5 wt.-%;

- Al in an amount of 15 to 16 wt.-%;

- Mg in an amount of 0.03 to 0.05 wt.-%;

based on the total weight of the shaped material, respectively.
The LiMgAl-layered double hydroxide may comprise Li in an amount of at least 1.0 wt.-%, or at least 1.4 wt.-% based on the total weight of the shaped material, respectively. The LiMgAl-layered double hydroxide may comprise Li in an amount of 2.5 wt.-% or less, less than 1.7, or 1.5 wt.-% or less based on the total weight of the shaped material, respectively.
The LiMgAl-layered double hydroxide may comprise Al in an amount of at least 10 wt.-%, or at least 15 wt.-% based on the total weight of the shaped material, respectively. The LiMgAl-layered double hydroxide may comprise Al in an amount of 26 wt.-% or less, 17 wt.-% or less, or 16 wt.-% or less, less based on the total weight of the shaped material, respectively.
The LiMgAl-layered double hydroxide may comprise Mg in an amount of at least 0.01 wt.-%, 0.03 wt.-% or 0.04 wt.-% based on the total weight of the shaped material, respectively. The LiMgAl-layered double hydroxide may comprise Mg in an amount of 0.4 wt.-% or less, 0.2 wt.-% or less, 0.1 wt.-% or less, or 0.05 wt.-% or less based on the total weight of the shaped material, respectively.
The LiMgAl-layered double hydroxide may comprise

- Li in an amount of about 1.48 wt.-%;

- Al in an amount of about 15.7 wt.-%;

- Mg in an amount of about 0.05 wt.-%;

based on the total weight of the shaped material, respectively.

In the shape material, a molar ratio Li/Al may be from 0.3 to 0.6, from 0.35 to 0.45, or from 0.35 to 0.39. In the shape material, a molar ratio Li/Al may be 0.3 or more, 0.35 or more, 0.35 or more, or 0.37 or more. In the LiMgAl-layered double hydroxide, a molar ratio Li/Al may be 0.6 or less, 0.45 or less, 0.40 or less, less than 0.40, 0.39 or less, 0.38 or less, or 0.37 or less.

Characterization of the adsorbent precursor and/or the purified adsorbent precursor and/or the layered double hydroxide may be performed on a dry sample by the following method. An X-ray diffraction (XRD) pattern of dry powder was obtained from an X-ray diffractometer (Rigaku MiniFlex) with Cu K$\alpha$ radiation having a wavelength of 1.5405 Å, under a voltage of 40 kV and a current of 30 mA.

Respective layered double hydroxides, especially the LiMgAl-layered double hydroxide, in particular such LiMgAl-layered double hydroxides fulfilling one or even better more than one of the above conditions have been found to show advantageous Li adsorption/desorption capacity.

The shaped material may further comprise a binder. The binder may be selected from the group consisting of oxalic acid, acetic acid, polyethylene (PE), polypropylene (PP), polyvinyl chloride (PVC), chlorinated polyvinyl chloride (CPVC), fluororesin, perchlorinated alkene, cellulose acetate butyrate, polyvinylidene fluoride (PVDF), Polyvinylpyrrolidone (PVP), Poly(vinyl alcohol) (PVA), polymethyl methacrylate (PMMA), polycarbonate (PC), styrene-butadiene emulsion, carboxylmethyl cellulose (CMC), polytetrafluoroethylene (PTFE) emulsion, and acrylic resin emulsion or mixtures of two or more thereof. Such a binder has a positive impact on the moldability of the material when forming the shaped material. The shaped material may comprise, essentially comprise or consist of the layered double hydroxide, especially the LiAl-layered double hydroxide as characterized above, the binder and water. The shaped material may comprise, essentially comprise or consist of the layered double hydroxide, especially the LiAl-layered double hydroxide as characterized above, the binder, water.

The shaped material may comprise, essentially comprise or consist of the layered double hydroxide, especially the LiMgAl-layered double hydroxide as characterized above, the binder and water. The shaped material may comprise, essentially comprise or consist of the layered double hydroxide, especially the LiMgAl-layered double hydroxide as characterized above, the binder, water and a sodium containing salt, such as sodium chloride.

The shaped material may comprise the LDH in an amount of 40 to 80 wt.-%; the binder in an amount of 0.5 to 10 wt.%, with respect to the total weight of the shaped material based on the total weight of the shaped material, respectively, the remaining amount being balanced with water, wherein the shaped material may optionally contain minor amounts, such as about 0.01 wt.-%, of sodium chloride. The shaped material may comprise the LDH in an amount of 50 to 70 wt.-%; the binder in an amount of 0.5 to 5 wt.%, with respect to the total weight of the shaped material based on the total weight of the shaped material, respectively, the remaining amount being balanced with water, wherein the shaped material may optionally contain minor amounts, such as about 0.01 wt.-%, of sodium chloride. The shaped material may comprise the LDH in an amount of 55 to 65 wt.-%; the binder in an amount of 1 to 3 wt.%, with respect to the total weight of the shaped material based on the total weight of the shaped material, respectively, the remaining amount being balanced with water, wherein the shaped material may optionally contain minor amounts, such as about 0.01 wt.-%, of sodium chloride. The shaped material may comprise the LDH in an amount of about 60 wt.-%; the binder in an amount of about 2 wt.%, with respect to the total weight of the shaped material based on the total weight of the shaped material, respectively, the remaining amount being balanced with water, wherein the shaped material may optionally contain minor amounts, such as about 0.01 wt.-%, of sodium chloride.

The shaped material may have a specific surface area from 5 to 130 $m^2/g$, 60 to 130 $m^2/g$, 60 to 80 $m^2/g$, or 65 to 75 $m^2/g$ measured by BET. Specifically, the BET surface area can be measured by degassing the shaped material at 110 °C for overnight before measuring on a surface area and porosity analyzer (Micromeritics, ASAP 2460). The BET surface area may be measured according to ASTM D3663-20 in the version at the priority date of the present application.

The shaped material may have a total intrusion volume from 0.04 to 1.0 mL/g, from 0.35 to 0.45 mL/g, or from 0.40 to 0.42 mL/g, measured by mercury porosimetry according to ASTM UOP578-11 in the version at the priority date of the present application.

The shaped material may have a total pore area from 10 to 250 $m^2/g$, from 110 to 130 $m^2/g$, or from 110 to 120 $m^2/g$, measured by mercury porosimetry ASTM UOP578-11 in the version at the priority date of the present application.

The shaped material may have a porosity from 5 to 70 % (0.05 to 0.7), from 40 to 70 % (0.4 to 0.7), from 40 to 50 % (0.4 to 0.5) or from 40 to 45 % (0.4 to 0.45), measured by mercury porosimetry. The porosity refers to the ratio, especially the percentage of the pore volume of the shaped material and the total volume of the shaped material measured by mercury porosimetry. The unit of the porosity is percent (%) or no unit. Especially, the porosity may be measured by a mercury porosimeter (Micromeritics, MicroActive AutoPore V9600). The porosity may be measured according to ASTM UOP578-11 in the version at the priority date of the present application.

The shaped material may have a porosity from larger than 0.07 (such as 0.071) to 0.7 (0.07 < *porosity* ≤ 0.7), preferably from 0.1 to 0.7, more preferably from 0.2 to 0.7, further preferably from 0.3 to 0.6, even more preferably from 0.3 to 0.55, most preferably from 0.4 to 0.43. The porosity may be larger than 0.07, preferably may be at least 0.1, at least 0.15, at least 0.2, at least 0.25, at least 0.3, at least 0.35, at least 0.4, or at least 0.43. The porosity may be 0.7 or less, 0.65 or less, 0.6 or less, 0.55 or less, 0.5 or less, 0.45 or less, or 0.43 or less. Choosing the porosity accordingly is advantageous in view of adsorption and/or desorption efficiency, measured by mercury porosimetry.

The shaped material may have a median pore diameter from larger than 5.2 nm (such as 5.21 nm) to 750 nm (5.21 < *median pore diameter* < 750), preferably from 5.5 nm to 100 nm, more preferably from 10 nm to 20 nm, further preferably from 12 nm to 20 nm, even more preferably from 15 nm to 20 nm, most preferably from 15 nm to 18 nm. The median pore diameter may be larger than 5.21 nm, preferably may be at least 5.5 nm, at least 7 nm, at least 10 nm, at least 12 nm, at least 12.4 nm, at least 13 nm, at least 13.5 nm, at least 14 nm, at least 14.5 nm, at least 15 nm, at least 15.5 nm, or at least 15.8 nm. The median pore diameter may be 750 nm or less, 700 nm or less, 650 nm or less, 600 nm or less, 550 nm or less, 500 nm or less, 450 nm or less, 400 nm or less, 350 nm or less, 300 nm or less, 250 nm or less, 200 nm or less, 150 nm or less, 100 nm or less, 50 nm or less, 40 nm or less, 35 nm or less, 30 nm or less, 25 nm or less, 20 nm or less, 18 nm or less, 17 nm or less, 16 nm or less, or 15.8 nm or less. Choosing the median pore diameter accordingly is advantageous in view of adsorption and/or desorption efficiency, measured by mercury porosimetry.

Method for preparing the shaped material

According to a second aspect, the present invention relates to a method for preparing the shaped material according to the present invention in which the shaped material comprises a a purified adsorbent precursor (for example, a LiAl- layered double hydroxide, a LiMgAl-layered double hydroxide), that is, the shaped material comprising a purified adsorbent precursor (for example, LiAl- layered double hydroxide, a LiMgAl-layered double hydroxide) as characterized above in detail with respect to the first aspect of the invention.

*Preparing the adsorbent precursor*

The method comprises a first step of reacting a lithium precursor and an aluminum precursor, and optionally a magnesium precursor. The reacting step may be co-precipitating or solid state reaction, preferably co-precipitating.

Preferably, the method comprises a first step of co-precipitating a lithium precursor, and an aluminum precursor, optionally a magnesium precursor, from an aqueous solution to obtain an adsorbent precursor. The co-precipitating may be performed in the presence of a base.

The co-precipitating may comprise the sub-steps: (1) Mixing the lithium precursor and the base, thereafter adding the magnesium precursor, and thereafter adding the aluminum precursor; or (2) Mixing the lithium precursor and the base, thereafter adding the aluminum precursor, and thereafter adding the magnesium precursor; or (3) Mixing the lithium precursor and the base, mixing the magnesium precursor and the aluminum precursor, and thereafter mixing both mixtures; or (4) mixing the lithium precursor, the base, the magnesium precursor, and the aluminum precursor.

The co-precipitating may preferably comprise the sub-steps: Mixing the lithium precursor and the base, thereafter adding the magnesium precursor, and thereafter adding the aluminum precursor.

The co-precipitation, especially adding the magnesium precursor and the aluminum precursor to the mixture of lithium precursor and base, can be performed at a temperature from 20 °C to 100 °C, preferably from 70 to 80 °C. Especially, the lithium precursor and the base may be first mixed at room temperature (20 to 25°C), followed by heating the mixture to a temperature from 70 to 80°C and then adding the magnesium precursor and the aluminum precursor.

The co-precipitating may comprise a further sub-step after adding the aluminum precursor of aging the obtained mixture.

The aging may be performed at a temperature from 20 °C to 100 °C, preferably from 70 to 80 °C. The aging may be performed for 1 to 3 hours, such as about 2 hours.

The co-precipitating and the aging may be performed at pH 4 to 10, preferably 6 to 7.

The lithium precursor may be a lithium salt. Preferably, the lithium precursor is selected from the group consisting of lithium hydroxide, lithium chloride, lithium nitrate, lithium sulphate, lithium carbonate, and a mixture of two or more thereof. More preferably, the lithium precursor is lithium hydroxide.

The aluminum precursor may be an aluminum salt or an aluminum hydroxide, preferably may be selected from the group consisting of aluminum chloride, aluminum nitrate, aluminum sulphate, aluminum hydroxide (gibbsite, bayerite, nordstrandite, and doyleite), aluminum oxide hydroxide (boehmite), alone or as a mixture of two or more thereof. Preferably, the aluminum precursor is aluminum chloride.

The magnesium precursor may be a magnesium salt, preferably may be selected from the group consisting of magnesium chloride, magnesium nitrate, magnesium sulphate, alone or as a mixture of two or more thereof. More preferably, the magnesium precursor is magnesium chloride.

The base may be selected from the group consisting of sodium hydroxide, potassium hydroxide, lithium hydroxide, ammonia, alone or as a mixture of two or more thereof. Preferably, the base is sodium hydroxide.

At the end of the co-precipitating step, a precipitated product is obtained referred to as "adsorbent precursor".

*Purification*

The method comprises a second step of purifying the adsorbent precursor to obtain purified adsorbent precursor.

Preferably, the method comprises a second step of washing the adsorbent precursor. The washing may include contacting the adsorbent precursor with deionized water or with a lithium chloride containing solution (for example, 100 ppm or 100 ppm less lithium chloride solution), preferably contacting with deionized water. Without the washing step, NaCl residue can impact the shaping properties of the obtained material and lead to poor porosity, low permeability, and low Li capacity. Excess wash may lead to the leaching of lithium and aluminium from sorbent. In this regard, "excess wash" refers to unnecessary wash to bring sodium level much lower than 0.2 wt%, for example to 0.02 wt% or less.

The washing may be washing the adsorbent precursor until a residual content of sodium, that is, sodium ions, in the adsorbent precursor is less than 0.2 wt.-%, with respect to the total weight of the dry purified adsorbent precursor. The purified adsorbent precursor may be filtrated and dried in an vacuum oven, preferably at about 50 °C to get the dry purified adsorbent precursor. The Na content may be measured by an Inductively Coupled Plasma (ICP) Optical Emission Spectrometry (OES) (Thermo Fisher, iCAP 7200 ICP-OES Analyser Duo).

The washing may include a first sub-step of cooling the adsorbent precursor as obtained in the co-precipitating step to a temperature of less than 50°C, a second sub-step of filtrating the cooled adsorbent precursor, a third sub-step of washing the filtrated adsorbent precursor with deionized water, preferably until a residual content of sodium, that is, sodium ions, in the adsorbent precursor is less than 0.2 wt.-%, with respect to the total weight of the dry sample, and drying the purified adsorbent precursor, preferably at a temperature of more than 50 °C, preferably from 70 to 90 °C, such as about 80°C, preferably until a moisture content is about 40 to 60 wt.-%, such as from 40 to 50 wt.-% with respect to the total weight of the dried adsorbent precursor.

The material obtained in the washing step is referred to as "purified adsorbent precursor".

*Mixing with binder*

The method comprises a third step of mixing the purified adsorbent precursor with a binder, preferably homogeneously mixing the purified adsorbent precursor with a binder.

The binder may be selected from the group consisting of oxalic acid, acetic acid, polyethylene (PE), polypropylene (PP), polyvinyl chloride (PVC), chlorinated polyvinyl chloride (CPVC), fluororesin, perchlorinated alkene, cellulose acetate butyrate, polyvinylidene fluoride (PVDF), Polyvinylpyrrolidone (PVP), Poly(vinyl alcohol) (PVA), polymethyl methacrylate (PMMA), polycarbonate (PC), styrene-butadiene emulsion, carboxylmethyl cellulose (CMC), polytetrafluoroethylene (PTFE) emulsion, and acrylic resin emulsion or mixtures of two or more thereof. Preferably, the binder is oxalic acid. Such a binder has a positive impact on the moldability of the material when forming the shaped material.

The amount of binder mixed with the purified adsorbent precursor may be 0.5 to 10 wt.%, 0.5 to 5 wt.%, 1 to 3 wt.%, or about 2 wt.%, with respect to the total dried weight of the purified adsorbent precursor as measured by a moisture balance (Ohaus, MB120) at 105 °C until the mass change is less than 1 mg within 90 seconds.

The material obtained in the mixing step is referred to as "shapable composition".

*Shaping*

The method comprises a fourth step of forming the shapable composition. The forming may be selected from rotary granulating, spherizing, extruding, and grinding. For example, shaping into a spherical shape may be achieved by an spheorniser; shaping into a pellet shape may be achieved by an extruder; shaping into a particle shape may be achieved by a grinder; and shaping into a granule may be achieved by a granulator machine.

Preferably, the method comprises a fourth step of extruding the shapable composition. Extruding may be performed with an extruder, such as a slot die extruder, for example, through 1/16" slot die of an extruder at constant speed.

The material obtained this way is referred to as "shaped material".

*Shaped material*

The shaped material obtained by the inventive method is the shaped material according to the invention, especially may have one or more of the characteristics as outlined above.

The chemical composition of the shaped material may be determined by an Inductively Coupled Plasma (ICP) Optical Emission Spectrometry (OES) (Thermo Fisher, iCAP 7200 ICP-OES Analyser Duo).

The dry mass of the shaped material was determined by drying the shaped material in a moisture balance (Ohaus, MB120) at 105 °C until the mass change is less than 1 mg within 90 seconds

Method for extracting lithium from a lithium-containing aqueous solution

According to a third aspect, the present invention relates to a method for extracting lithium from a lithium-containing aqueous solution.

The method comprises contacting a shaped material according to the present invention, especially, a shaped material as characterized above in detail with respect to the first aspect of the invention, respectively a shaped material obtainable by the method as characterized above in detail with respect to the second aspect of the invention, with the lithium-containing aqueous solution.

Extracting of the lithium from the lithium-containing aqueous solution may comprise or may be adsorbing lithium on the surface of the shaped material when bringing the shaped material in contact with the lithium-containing aqueous solution and desorbing the lithium from the surface of the shaped material later to collect the desorbed lithium. The desorbing of the lithium may be considered as a separate step of regenerating the shaped material after the step of contacting the shaped material with a lithium salt containing solution. The regenerating may be performed at a temperature very similar (<0.5°C) to the adsorption temperature.

Lithium in this context includes or means lithium ions ($Li^+$). Preferably, lithium is comprised in the lithium-containing aqueous solution in the form of lithium chloride (LiCl). The lithium-containing aqueous solution may have a $Li^+$ concentration from 50 to 3,000 ppm, such as about 400 ppm. The lithium-containing aqueous solution may have a $Cl^-$ concentration from 10,000 to 220,000 ppm, such as about 50,000 ppm. About 90 wt.-% or more of the lithium may be adsorbed by the shaped material. The chloride gradient between brine and sorbent (shaped material) may be the driving force of lithium adsorption/desorption.

The lithium-containing aqueous solution may be selected from the group consisting of lithium containing brine, especially salar brine, geothermal brine, oilfield brine, seawater, concentrated seawater, concentrated brine, leachate from ore, leachate from spent lithium battery, other lithium containing waters and mixtures of two and more thereof.

Contacting the shaped material and the lithium-containing aqueous solution may be performed in an appropriate reactor, for example a fixed-bed column, a moving-bed system, a simulated moving-bed system, or a stirring tank system. Contacting the shaped material and the lithium-containing aqueous solution may be performed for 1-60 mins, such as 8 mins at a temperature from 20 to 60°C. Higher temperatures may cause decomposition of the shaped material or parts thereof.

The method for extracting lithium from a lithium-containing aqueous solution according to the present invention may further comprise a step of activating the shaped material before contacting the shaped material with the lithium-containing aqueous solution.

The activating may comprise contacting the shaped material with a lithium salt containing solution having a lithium concentration of 0 to 3,000 ppm, preferably 1 to 3,000 ppm, more preferably of 100 to 300 ppm, such as about 200 ppm. The lithium salt may be selected from the group consisting of lithium chloride, lithium nitrate, lithium sulfate, lithium carbonate and a mixture of two or more thereof. Preferably, the lithium salt is lithium chloride.

The method for extracting lithium from a lithium-containing aqueous solution according to the present invention may be performed at a pH from 4 to 10.

Use of a shaped material for extracting lithium from a lithium-containing aqueous solution

According to a fourth aspect, the invention relates to the use of a shaped material according to the present invention, especially, a shaped material as characterized above in detail with respect to the first aspect of the invention, respectively a shaped material obtainable by the method as characterized above in detail with respect to the second aspect of the invention, for extracting lithium from a lithium-containing solution. The use may comprise one or more process steps set forth above with respect to the third aspect of the invention.

EXAMPLES

Preparation of shaped material

*Example 1*

For preparation of example 1, an adsorbent precursor can be prepared as follows.

A mixed aqueous solution A was prepared by dissolving 0.348 kg lithium hydroxide monohydrate ($LiOH \cdot H_2O$) and 1.720 kg sodium hydroxide (NaOH) in 11.15 L de-ionised water in a 20 L CHEMGLASS reactor with a stirring speed of 150 rpm. An aqueous solution B was prepared by dissolving 0.07 kg magnesium chloride hexahydrate ($MgCl_2 \cdot 6H2O$) in

0.47 L de-ionised water. An aqueous solution C was prepared by dissolving 4.114 kg aluminium chloride hexahydrate ($AlCl_3 \cdot 6H_2O$) in 5.6 L de-ionised water. Solution A was heated to 75 °C and solution B and solution C were added in this order. The mixture was kept for another 2 h at 75 °C.

The mixture was cooled down to a temperature of less than 50 °C. The resultant slurry was transferred and filtered with a CHEMGLASS filtration system and the filtered residue was washed with de-ionised water until a sodium (Na) concentration was less than 0.2 wt.-%, with respect to the total weight of the dry washed adsorbent precursor. The washed adsorbent precursor was filtrated and dried in an vacuum oven at 50 °C to get the dry washed adsorbent precursor and Na content was then measured by an Inductively Coupled Plasma (ICP) Optical Emission Spectrometry (OES) (Thermo Fisher, iCAP 7200 ICP-OES Analyser Duo). The obtained washed wetcake was dried in an oven at 80 °C until the moisture content was around 40-50%. Thereafter, the dried wetcake was mixed with oxalic acid (2 wt%) as a binder followed by extrusion through 1/16" slot die of a BONNOT extruder at 10 rpm to make a pellet-shaped adsorbent (S1). A portion of the washed wetcake was dried in 50 °C vacuum oven for overnight for material characterization.

For characterization, X-ray diffraction (XRD) patterns of the dry powder was obtained from a X-ray diffractometer (Rigaku MiniFlex) with Cu K$\alpha$ radiation having a wavelength of 1.5405 Å, under a voltage of 40 kV and a current of 30 mA. The chemical composition of extrudate was measured by an Inductively Coupled Plasma (ICP) Optical Emission Spectrometry (OES) (Thermo Fisher, iCAP 7200 ICP-OES Analyser Duo). BET surface area was measured by degassing the adsorbent pellet at 110 °C for overnight before measuring on a surface area and porosity analyser (Micromeritics, ASAP 2460).

Porosity, median pore diameter total pore area, total intrusion volume of adsorbent pellet were measured by a Mercury porosimeter (Micromeritics, MicroActive AutoPore V9600). The dry mass of adsorbent pellet was determined by drying the adsorbent pellet in a moisture balance (Ohaus, MB120) at 105 °C until the mass change is less than 1 mg within 90 seconds

The adsorbent pellet was evaluated with a lithium containing brine water at 60 °C after packed in a fixed bed column. The adsorbent pellet was activated with lithium chloride aqueous solution containing 200 ppm Li+ until the eluate contains 250 ppm lithium or less. The activated adsorbent was then treated with some bed volume of brine water until the lithium in eluate reaches same level to the raw brine. In this regard, the bed volume is volume of the column (bed) that packed with the adsorbent. Bed volume (BV) is the term to describe how much volume of brine can be processed with the respect the adsorbent volume. the bed volume can be 5-40 bed volume brine depends on the brine conditions. The saturated Li capacity of adsorbent was calculated by the integration of breakthrough curve and dividing by the dry mass of adsorbent.

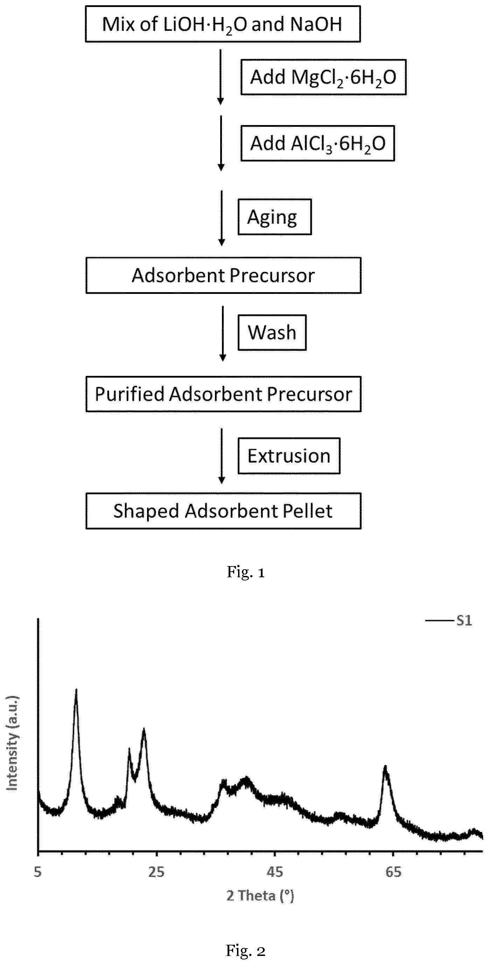

The XRD pattern in Fig. 2 shows that the adsorbent precursor in S1 has a high purity of lithium aluminium layered double hydroxide phase. Elemental analysis (Table 1) shows that the adsorbent pellet S1 contains 1.48 wt% Li, 15.7 wt% Al, 0.05 wt% Mg based on the total weight of the adsorbent pellet. A Li/Al atomic ratio is calculated to be 0.37. The measured surface area of S1 is 71 m$^2$/g. Mercury porosimetry shows that the porosity of adsorbent pellet S1 is 0.43, median pore diameter is 15.8 nm, resulting in a cross feature *[porosity x median pore diameter]* of 6.79 nm.

*Example 2*

For preparation of example 2, the adsorbent precursor was synthesized as described for Example 1 except that the 2.088 kg lithium hydroxide monohydrate (LiOH·$H_2O$) was used as Li precursor while no sodium hydroxide (NaOH) was used. Therefore, 5 times lithium excess is adopted in the synthesis of adsorbent precursors. The final collected adsorbent pellet is noted as S2.

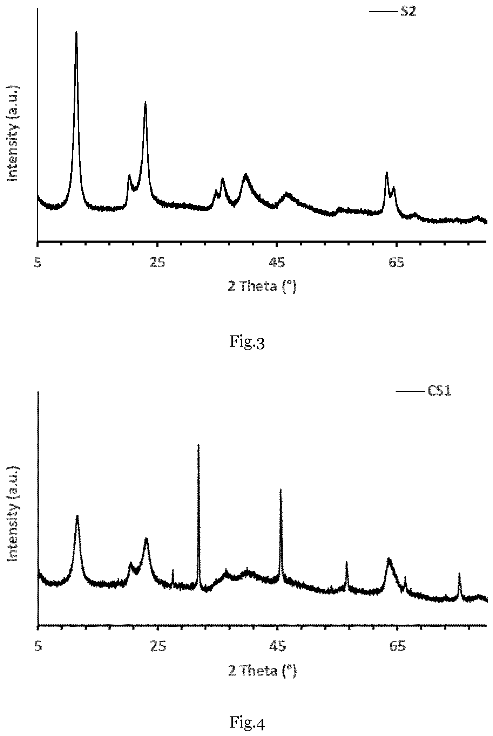

The XRD patterns in Fig. 3 shows that adsorbent precursor in S2 has a better purity and crystallinity compared to sample S1. Elemental analysis (Table 1) shows that S2 has a higher Li wt.-% and Al wt.-% but lower Mg wt.-% than S1. The Li/Al atomic ratio is calculated to be 0.40 which is slightly higher than that in S1. Significant higher surface (121 m$^2$/g) and similar porosity is obtained with lower median pore diameter (12.4 nm). The value of cross feature is *[porosity x median pore diameter]* 5.33 nm.

*Comparative Example 1*

For preparation of comparative example 1, the adsorbent precursor was prepared as described in Example 1 except that the collected adsorbent precursor wetcake went through the extrusion without the washing step. The obtained adsorbent pellet is denoted as CS1.

The XRD patterns in Fig. 4 shows that adsorbent precursor in CS1 contains both lithium magnesium aluminium layered double hydroxide and significant sodium chloride residue (peaks at 27.4°, 31.7°, 45.4°, 53.7°, and 66.2°). Elemental analysis (Table 1) shows lower Li wt.-% and Mg wt.-% but a higher Li/Al ratio. CS1 has a very low BET surface area (6 m$^2$/g), porosity (0.07) and poor median pore diameter (5.2 nm). The cross feature of *[porosity x median pore diameter]* is only 0.36 nm.

Lithium extraction

The adsorbent pellet was evaluated with a lithium containing brine water at 60 °C after packed in a fixed bed column. The adsorbent was activated with lithium chloride aqueous solution containing 200 ppm Li until the eluate contains less than 250 ppm lithium. The activated adsorbent was then treated with some bed volume of brine water until the lithium in eluate reaches same level to the raw brine. The saturated Li capacity of adsorbent was calculated by the integration of breakthrough curve and dividing by the dry mass of adsorbent.

The evaluation of the Li capacity of adsorbent pellet S1 gave a saturated lithium capacity of 8.4 mg/g (dry mass).

The evaluation of the Li capacity of adsorbent pellet S2 gave a saturated lithium capacity of 6.0 mg/g (dry mass).

The evaluation of the Li capacity of adsorbent pellet CS1 gave a saturated lithium capacity of 0.2 mg/g (dry mass).

Table 1:

| Samples | S1 | S2 | CS1 |
|---|---|---|---|
| Description of adsorbent | LiMgAl-LDH | LiMgAl-LDH | LiMgAl-LDH |
| | No Li excess | With Li excess | No Li excess |
| | With wash | With wash | No wash |
| Li, wt% | 1.48 | 1.7 | 1.2 |
| Al, wt% | 15.7 | 16.6 | 11.0 |
| Mg, wt% | 0.05 | 0.03 | 0.05 |
| Li/Al | 0.37 | 0.40 | 0.43 |
| BET surface area, m2/g | 71 | 121 | 6 |
| Total intrusion volume, mL/g | 0.40 | 0.42 | 0.04 |
| Total pore area, m2/g | 113 | 125 | 28 |
| Porosity | 0.43 | 0.43 | 0.07 |
| Median pore diameter, nm | 15.8 | 12.4 | 5.2 |
| *Porosity x median pore diameter, nm* | 6.79 | 5.33 | 0.36 |
| Li capacity, mg/g | 8.4 | 6.0 | 0.2 |

While embodiments of the present invention have been shown and described, it will be understood by those of ordinary skill in the art that various changes in form and details may be made therein without departing from the spirit and scope of the present disclosure as defined by the following claims.

**Claims**

1. A shaped material for extracting lithium from a lithium-containing aqueous solution, wherein the shaped material fulfills the following Formula 1

Formula 1:

$$porosity * median\ pore\ diameter > 0.36\ nm$$

wherein

the porosity is the ratio of the pore volume of the shaped material and the total volume of the shaped material measured by mercury porosimetry; and
the median pore diameter is the pore diameter where 50% of the total pore volume has been added in the cumulative pore volume. The cumulative pore volume versus the pressure can be measured by mercury porosimetry.

2. The shaped material according to claim 1, wherein the shaped material is in a form selected from the group consisting of pellets, particles, granules, spheres, extrudates or mixtures thereof.

3. The shaped material according to claim 1 or 2, wherein the shaped material comprises a layered double hydroxide.

4. The shaped material according to claim 3, wherein the layered double hydroxide is a LiAl-layered double hydroxide or a LiMgAl-layered double hydroxide, preferably a LiMgAl-layered double hydroxide.

5. The shaped material according to claim 4, wherein LiMgAl-layered double hydroxide comprises

- Li in an amount of 1.0 to 2.5 wt.-%;
- Al in an amount of 10 to 26 wt.-%;
- Mg in an amount of 0.01 to 0.4 wt.-%;

based on the total weight of the shaped material, respectively.

6. The shaped material according to any of the claims 3 to 5, wherein the shaped material further comprises a binder.

7. The shaped material according to claim 6, wherein the shaped material comprises the LDH in an amount of 40 to 80 wt.-% and the shaped material comprises the binder in an amount of 0.5 to 10 wt.% with respect to the total weight of the shaped material.

8. The shaped material according to any of the preceding claims, wherein that shaped material has a porosity from larger than 0.07, preferably from 0.4 to 0.43, measured by mercury porosimetry.

9. The shaped material according to any of the preceding claims, wherein that shaped material has a median pore diameter from larger than 5.2 nm, preferably 12 to 20 nm, measured by mercury porosimetry.

10. A method for preparing the shaped material according to any of the claims 3 to 9, the method comprising the steps:

- preparing an adsorbent precursor from a mixture comprising a lithium precursor, and an aluminum precursor, and optionally a magnesium precursor;
- purifying the adsorbent precursor to obtain a purified adsorbent precursor;
- mixing the purified adsorbent precursor with a binder to obtain a shapable composition; and
- shaping the shapable composition to obtain the shaped material.

11. The method for preparing the shaped material according to claim 10, wherein the mixture is an aqueous solution and preferably further comprises sodium hydroxide.

12. A method for extracting lithium from a lithium-containing aqueous solution comprising contacting a shaped material according to any of the claims 1 to 9 with the lithium-containing aqueous solution.

13. The method for extracting lithium from a lithium-containing aqueous solution according to claim 12, wherein the method further comprises a step of activating the shaped material before contacting the shaped material with deionized water or the lithium-containing aqueous solution.

14. The method for extracting lithium from a lithium-containing aqueous solution according to claim 13, wherein the activating comprises contacting the shaped material with a lithium salt containing solution having a lithium concentration of 0 to 3,000 ppm.

15. Use of a shaped material according to any of the claims 1 to 9 for extracting lithium from a lithium-containing aqueous solution.

Fig. 1

Fig. 2

Fig.3

Fig.4

**EUROPEAN SEARCH REPORT**

Europäisches Patentamt
European Patent Office
Office européen des brevets

| Application Number |
|---|
| EP 24 17 3237 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHONG JING ET AL: "Lithium recovery from ultrahigh Mg2+/Li+ ratio brine using a novel granulated Li/Al-LDHs adsorbent", SEPARATION AND PURIFICATION TECHNOLOGY, ELSEVIER SCIENCE, AMSTERDAM, NL, vol. 256, 25 September 2020 (2020-09-25), XP086338335, ISSN: 1383-5866, DOI: 10.1016/J.SEPPUR.2020.117780 [retrieved on 2020-09-25] * the whole document * | 1-15 | INV. B01J20/04 B01J20/08 B01J20/28 B01J20/30 C01F7/784 C02F1/28 |
| A | LUO QINGLONG ET AL: "Extraction of lithium from salt lake brines by granulated adsorbents", COLLOIDS AND SURFACES A : PHYSIOCHEMICAL AND ENGINEERINGS ASPECTS, vol. 628, 1 November 2021 (2021-11-01), page 127256, XP055947473, AMSTERDAM, NL ISSN: 0927-7757, DOI: 10.1016/j.colsurfa.2021.127256 * the whole document * | 1-15 | |
| A | DONG MINGZHE ET AL: "Reconstruction of MgAl-layered double hydroxides to LiAl-layered double hydroxides for scalable lithium extraction from salt lake brine", MINERALS ENGINEERING, vol. 202, 1 November 2023 (2023-11-01), page 108293, XP093213345, AMSTERDAM, NL ISSN: 0892-6875, DOI: 10.1016/j.mineng.2023.108293 * the whole document * | 1-15 | TECHNICAL FIELDS SEARCHED (IPC) B01J C01G C02F C01F |

The present search report has been drawn up for all claims

| Place of search | Date of completion of the search | Examiner |
|---|---|---|
| The Hague | 9 October 2024 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6280693 B1

- US 11666885 B2

**Non-patent literature cited in the description**

- **SALEH AL-DHAWI et al.** Case Studies. *Chemical and Environmental Engineering*, 2023, vol. 7, 100350

- *J. Geophys. Eng.*, 2013, vol. 10, 025014